# EUROPEAN PATENT SPECIFICATION

(11) **EP 1 898 658 B1**
(45) Date of publication and mention of the grant of the patent: **02.12.2009**
(21) Application number: 06775455.6
(22) Date of filing: 22.08.2006
(51) Int. Cl.: H04W 76/00

(54) **MSC AND CALLED PROCESS METHOD THEREOF**
MSC UND ZUGEHÖRIGES ANRUFVERWALTUNGSVERFAHREN
CENTRE DE COMMUNICATION MOBILE ET PROCEDE DE TRAITEMENT D'APPELS

(30) Priority: 29.11.2005 CN 200510110891
(43) Date of publication of application: 12.03.2008
(73) Proprietor: Huawei Technologies Co., Ltd., Longgang District Shenzhen 518129 (CN)
(72) Inventor: WANG, Hao, Guangdong 518129 (CN); JIA, Yongli, Guangdong 518129 (CN)
(74) Representative: Kreuz, Georg Maria
(86) International application number: PCT/CN2006/002137
(87) International publication number: WO 2007/062560

(56) References cited:
- WO-A-02/01903
- CN-A- 1 138 278
- CN-A- 1 149 377
- CN-A- 1 589 578
- US-A- 5 907 805
- US-A1- 2003 134 662
- "Digital cellular telecommunications system (Phase 2+); Universal Mobile Telecommunications System (UMTS); Customized Applications for Mobile network Enhanced Logic (CAMEL) Phase X; Stage 2 (3GPP TS 23.078 version 6.7.0 Release 6); ETSI TS 123 078" ETSI STANDARDS, LIS, vol. 3-CN2, no. V6.7.0, 1 September 2005 (2005-09-01), XP014032438 ISSN: 0000-0001
- "Digital cellular telecommunications system (Phase 2+); Universal Mobile Telecommunications System (UMTS); Mobile Application Part (MAP) specification (3GPP TS 29.002 version 6.11.0 Release 6); ETSI TS 129 002" ETSI STANDARDS, LIS, vol. 3-CN2;3-CN4, no. V6.11.0, 1 September 2005 (2005-09-01), XP014032661 ISSN: 0000-0001

## Description

### Field of the Invention

The present invention relates to mobile communication technologies and more particularly to a called party processing technology for a Mobile Switching Centre (MSC) in a mobile communication system.

### Background of the Invention

The mobile telecommunication has been developed rapidly all over the world during the short time less than twenty years since an analog mobile communication system emerged in 80', and has already evolved from the first generation analog system into the second digital system. At present, the second generation digital system mainly includes Global System for Mobile communication (GSM), Code Division Multiple Access (CDMA), etc. GSM is applied most widely in the world, and the total number of its subscribers has reached a hundred million. In recent years, communication technologies have been developed more rapidly, in which the Wideband Code Division Multiple Access (WCDMA) communication system stands out among others. The WCDMA communication system is advantageous in high frequency utilization and strong anti-interference capacity, and thus is gradually becoming a popular mobile communication standard with stronger vitality and application prospect subsequent to the analog standard and GSM standard. In the field of digital mobile communication, WCDMA technology also plays an important role.

Since the entire telecommunication network is gradually developing toward intelligentization, broadband and personalization, no matter the GSM acting as one of the core networks for the current mobile communication or the WCDMA having stronger vitality and application prospect develops toward this orientation.

In a communication network, intelligence refers to the capacity of accessing the stored data, processing the data and making a determination according to the data. The intelligence allows the entire communication system to implement and control services faster, more easily and flexibly and to provide characteristic services such as intelligent prepaid service, universal number, online emergency phone and virtual private network. Taking the intelligent prepaid service as example, a subscriber may use any telephone to call and the charge for the call will be deducted from the subscriber's account instead of being recorded on a bill for the telephone used by the subscriber. Each time a call is initiated, the network may check whether the account and password dialed by the subscriber are available and whether the balance of the account can pay for the current call. When the call is terminated or the balance is exhausted, the call/charging information will be kept for the future use. In China, the well known 200, 300 and IP card phone are typical intelligent prepaid service.

Network intelligentization has the following characteristics that: information network resources are utilized efficiently; network resources are utilized efficiently; network functions are modularized; standardized network functions are used repeatedly to generate and implement new services; network function may be distributed flexibly in physical entities; standardized communication may be achieved between network functions via interfaces independent of services; a service subscriber may control service attributes specified by the subscriber; a service user may control service attributes specified by the user; service logic is standardized.

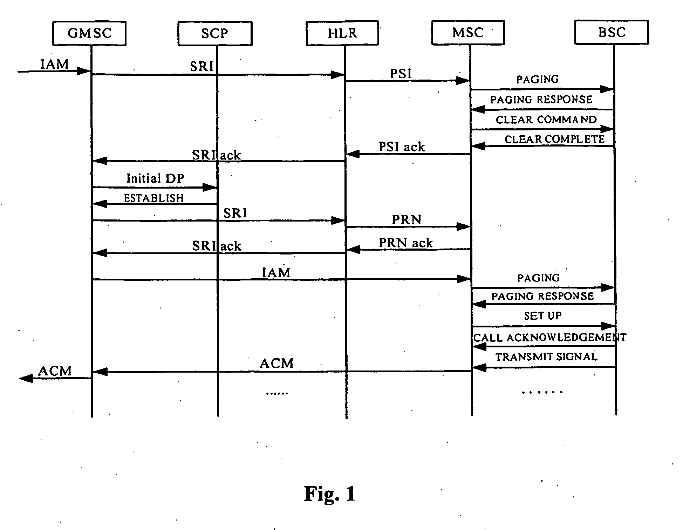

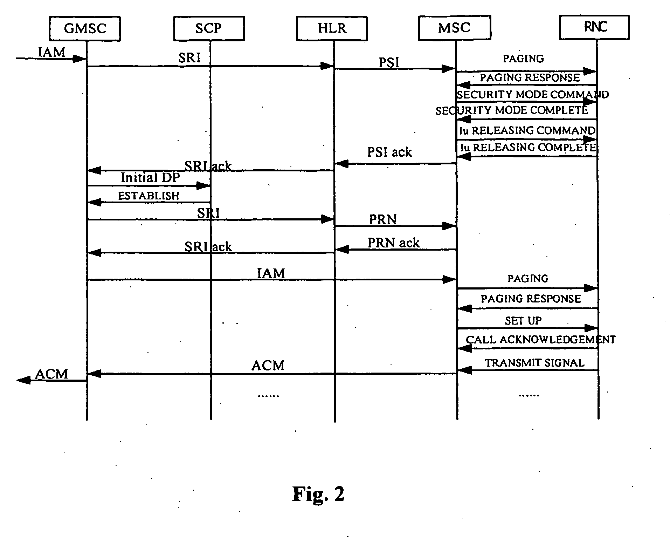

Figure 1 and Figure 2 show a conventional paging procedure of a mobile communication network in the case that an intelligent subscriber acts as a called subscriber.

The network paging flow in the case of an intelligent subscriber being as a called subscriber in the GSM system shown in Figure 1 relate to a Gateway Mobile Switching Centre (GMSC), a Service Control Point (SCP), a Home Location Register (HLR), a Mobile Switching Centre (MSC) and a Base Station Controller (BSC). The SCP is configured to store subscriber data and service logics. The SCP functions mainly to receive inquiry information from a Service Switch Point (SSP) and query the database for decoding. The SCP also initiates various service logics according to call events reported by the SSP and sends call control instructions to corresponding SSPs according to the service logics, so as to implement various intelligent calls. The HLR is a location register of the subscriber, and is configured to record the subscriber's latest location. The MSC is configured to control and manage the communication for the mobile subscribers located in the control region of the MSC, to provide an interface for connections with MSCs in other regions and connections with multiple base stations, and to establish and manage a call to/from a mobile subscriber and exchange information with the mobile subscriber. The BSC provides control functions such as network resource management and channel translating.

Referring to Figure 1, generally, when a call to an intelligent subscriber is initiated, a Provide Subscriber Information (PSI) flow is triggered firstly, that is, the MSC sends a PSI PAGING at first, and releases the connection with the mobile terminal side upon receipt of a PSI PAGING RESPONSE. The PSI PAGING is mainly used for obtaining the current location of the user equipment. A billing rate of the call may be determined according to the current location of the user equipment. If subscriber's prepaid fee allows the setup of this call, an ordinary call may be initiated. Therefore; this flow is usually used in processing the prepaid subscribers. However, since the ordinary call may not happen, the connection will be released immediately after the PSI call is completed as a call in common sense.

Subsequently, the PAGING message will be sent again for a normal call in the case of normal establishing of the ordinary call. After the PAGING is responded by the mobile terminal, the call is set up. Therefore, in general, paging will be made two times in the case that the called subscriber is an intelligent subscriber.

In the network paging flow in the case of an intelligent subscriber being as a called subscriber in a WCDMA system as shown in Figure 2, the GMSC, SCP, HLR and MSC are all identical with those shown in Figure 1, and the RNC refers to Radio Network Controller. This flow is mostly identical to that shown in Figure 1. When a call to an intelligent subscriber is initiated, a PSI flow is triggered firstly, that is, the MSC sends a PSI PAGING to the RNC. Upon receipt of a PSI PAGING RESPONSE, the MSC sends a SECURITY MODE COMMAND to the RNC. After the RNC responds the SECURITY MODE COMMAND, the MSC interrupts the connection with the mobile terminal side through an Iu Release procedure. Subsequently, the PAGING message will be sent again for a normal call in the case of normal establishing. After the PAGING is responded by the mobile terminal, the call is set up. Therefore, in general, paging will also be made two times in the case that the called subscriber is an intelligent subscriber.

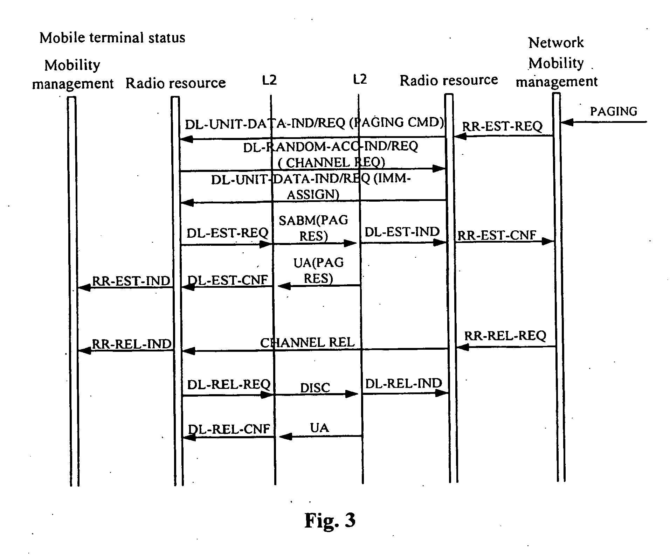

For the mobile terminal side, in each paging procedure, the mobile terminal needs to set up a radio channel connection to connect with a base station on the network side. After responding the PAGING, the mobile terminal needs to transfer from the current channel to a paging channel in order to respond to the next PAGING message. Accordingly, the mobile terminal needs to release the radio channel connection set up with the base station on the network side. Each of the paging processing flows of the mobile terminal side is shown in Figure 3. Therefore, when the called subscriber is an intelligent subscriber, the mobile terminal needs to set up a radio channel connection to connect with the base station on the network side when responding the first PSI PAGING, and release the radio channel connection after the PSI PAGING RESPONSE. Subsequently, the PAGING message will be sent again for a normal call in the case of normal establishing of the normal call. After the PAGING is responded by the mobile terminal, the normal call is set up.

Details of the above technologies may be learned from the "Mobile Application Part (MAP) specification" in 3GPP TS 29.002, the "Mobile radio interface Layer 3 specification; Core network protocols; Stage" in 3GPP TS 24.008 and "UTRAN Iu interface RANAP signalling" in 3GPP TS 25.413.

A Swedish patent application (WO 02/01903 A, entitled "CALL SET-UP IN A MOBILE TELECOMMUNICATIONS SYSTEM", ERICSSON TELEFON AB L M; 3 JANUARY 2002) discloses a method of re-establishing a call connection to a User Equipment (UE) in a UMTS mobile telecommunications network, which allow a network to establish a call connection using a pre-existing RAB and allow the extension of the timer T3240.

However, quite a number of steps need to be carried out (shown as Figure 3) each time the mobile terminal handles a paging. In addition, the interval between two paging procedures initiated by the network side is quite short (often about 1 second) when the called subscriber is an intelligent subscriber and the establishing may be carried out normally. Consequently, for some mobile terminals, it may be impossible to release the radio connections set up upon the first PSI PAGING RESPONSE and transfer from the radio channel set up upon the first PAGING RESPONSE to the paging channel in such a short period, and thus it may be impossible to respond the ordinary call in the second time or paging. Therefore the mobile terminals may make a response after paging is repeatedly sent from the network side for one or more times, increasing the time cost in processing the call, and even possibly causing the call unable to be established. In addition, if a mobile terminal can not respond the second time of paging immediately but makes a response after paging is sent from the network side for multiple times, the load or the access side will be increased and the resources of the network side will be wasted because the network side needs to perform procedures such as paging, accessing and authentication in each paging procedure.

### Summary of the Invention

In view of this, the present invention mainly aims to provide a mobile switching centre and a called party processing method thereof, so as to improve the success rate of paging for subsequent calls to an intelligent subscriber and simplify the call flow.

To this end, the present invention provides a called party processing method in a mobile communication system. The method includes:
upon termination of a first call, if the type of the first call is identical to a preset call type, holding, by a mobile switching centre, a connection to a called subscriber used is the first call, otherwise, releasing the connection;
upon receipt of a second call, if there is a connection held between the mobile switching centre and a called subscriber of the second call, directly using, by the mobile switching centre, the connection to proceed the call procedure, otherwise, setting up, by the mobile switching centre, a connection with the called subscriber through paging.

The method further includes:
releasing the connection of which a holding duration has exceeded a preset threshold.

The preset call type is Provide Subscriber Information call.

In addition, the type of the first call includes:
voice service paging, short message service paging, supplementary service paging, video service paging, location service paging and Provide Subscriber Information paging.

In addition, the mobile communication system comprises Global System for Mobile communication and Wideband Code Division Multiple Access system.

The present invention also provides a mobile switching centre, configured to control and manage communication and to establish and manage a call to/from a mobile subscriber located in a control region of the mobile switching centre, and including a connection releasing module configured to release a connection. The mobile switching centre further includes:
a call type identifying module, configured to determine whether the type of a call is identical to a preset call type;
a connection holding module, configured to hold a connection to a called subscriber used in the call upon termination of the call;
wherein when the processing for a call is performed by the mobile switching centre, the call type identifying module determines whether the type of the call is identical to a preset call type; if the type of the call is identical to a preset call type, the mobile switching centre invokes the connection holding module to hold the connection of the call for a next call to the same called subscriber; otherwise, the mobile switching centre invokes the connection releasing module to release the connection of the call.

The mobile switching centre further includes:
a timer, configured to start at a time when the connection holding module holds the connection, and to invoke the connection releasing module to release the connection when a preset duration expires.

In addition, the preset call type is Provide Subscriber Information call.

In addition, the mobile switching centre is subordinate to a Global System for Mobile communication or a Wideband Code Division Multiple Access system.

It may be seen by comparison that, the technical solution of the present invention is different from that of the prior art in that, for an intelligent subscriber, after completing the processing of a call, the MSC determines the type of the call instead of releasing the connection simply, and if the call is a specified call type such as a PSI call, the MSC holds the connection for the next call to the same called subscriber. There is a certain time threshold for holding the call. The connection will be released if there is no next call to this called subscriber beyond the time threshold.

The difference of the technical solution of the present invention from that of the prior art brings significant advantages. Since the connection held in the previous time may be utilized, initiating a paging two times in a short period may be avoided. As a result, the issue that some types of mobile phones can not respond a subsequent call paging immediately due to that the RR/RRC connection set up upon the PSI PAGING RESPONSE has not been released completely may be resolved, and thus the success rate of paging for subsequent ordinary calls may be increased.

Integrating two times of paging into one time simplifies the call procedure, shortens the time for establishing the call, saves the resources of the network side and the access side, reduces the PAGING messages to be sent to the access side from the network side, and decreases the load of the access side.

### Brief Description of the Drawings

Figure 1 is a schematic diagram illustrating a network paging flow in a GSM system when a called subscriber is an intelligent subscriber in the prior art.

Figure 2 is a schematic diagram illustrating a network paging flow in a WCDMA system when a called subscriber is an intelligent subscriber in the prior art.

Figure 3 is a schematic diagram illustrating each of the paging processing flows of the mobile terminal side in the prior art.

Figure 4 is a schematic diagram illustrating a flow at the termination of a call in a called party processing flow of a mobile communication system according to the present invention.

Figure 5 is a schematic diagram illustrating a flow at the receipt of a call in a called party processing flow of a mobile communication system according to the present invention.

Figure 6 is a schematic diagram illustrating the structure of an MSC in a mobile communication system according to the present invention in a called party processing flow of the mobile communication system.

Figure 7 is a schematic diagram illustrating a called part processing flow in a mobile communication system according to a first embodiment of the present invention.

Figure 8 is a schematic diagram illustrating a called part processing flow in a mobile communication system according to a second embodiment of the present invention.

### Detailed Description of the Embodiments

The present invention will be further described in detail in conjunction with the accompanying drawings, in order to make the objects, technical solutions and advantages of the present invention more easily understood.

A key principle of the present invention lies in that, after completing the processing of a call to an intelligent subscriber, an MSC in the network does not release the connection immediately, but determines the type of the call. If the call is a specified call type such as a PSI call, the MSC holds the connection and starts a timer for the next call to the same called subscriber; if there is no next call to this called subscriber when the time period of holding the connection exceeds a preset threshold, that is, when the timer expires, the MSC releases the connection. If the call is not a specified type of call, the MSC releases the connection. Consequently, when receiving a call, the MSC may check whether there is a connection with the called subscriber held currently; if there is, the currently held connection will be used for current call; otherwise, the MSC sets up a connection with the called subscriber terminal through paging. In this way, the present invention may avoid sending a paging two times successively to the same called subscriber during a short period, thereby increasing the paging success rate of subsequent calls to the intelligent subscriber and simplifying the call flow.

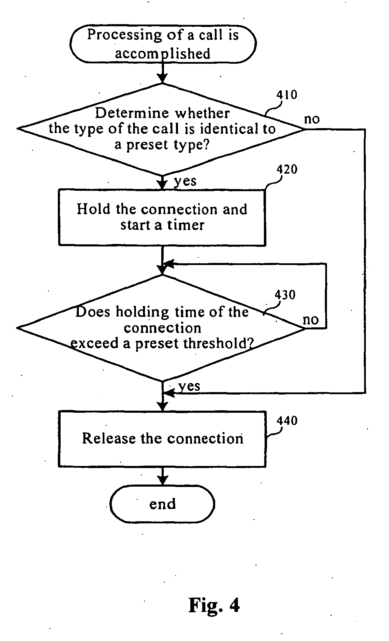

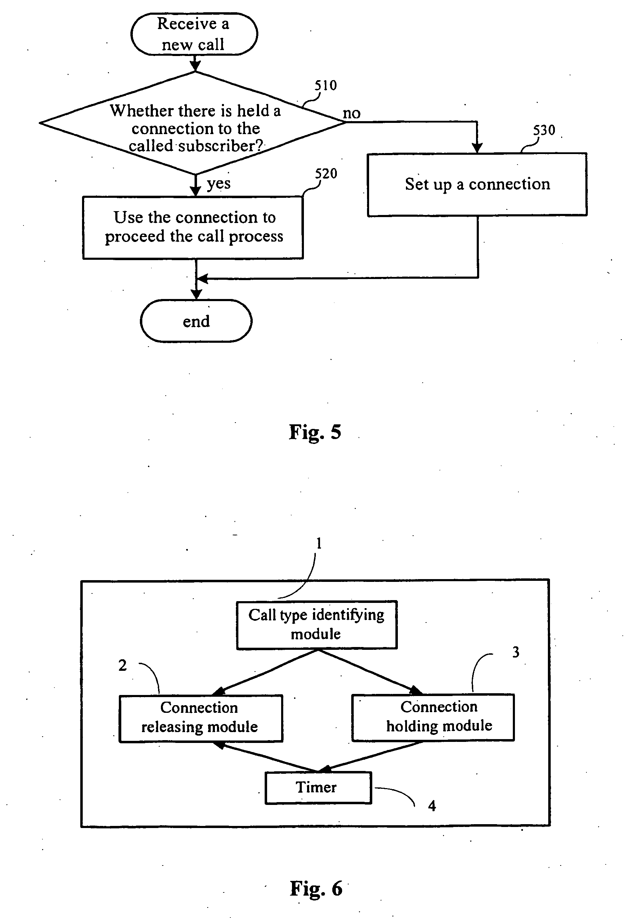

The principle of the present invention is illustrated in Figure 4 and Figure 5. Figure 4 is a schematic diagram illustrating a flow at the termination of a call in a called party processing flow of a mobile communication system according to the present invention. Figure 5 is a schematic diagram illustrating a flow at the receipt of a call in a called party processing flow of a mobile communication system according to the present invention. In the mobile communication system of the present invention, the MSC, configured to control and manage the communication of the mobile subscribers located in the control region of the MSC and to establish and manage calls, includes not only a connection releasing module, but also several newly added modules such as a call type identifying module, a connection holding module and a timer. The structure of an MSC in the present invention will be described hereunder.

Figure 6 shows the structure of an MSC in the present invention. The MSC includes a call type identifying module 1, a connection releasing module 2, a connection holding module 3 and a timer 4. The call type identifying module 1 is configured to determine whether the type of a call is identical to a preset call type. The connection holding module 3 is configured to hold a connection to a called subscriber in a call when the call is terminated. The connection releasing module 2 is configured to release a connection. The timer is configured to be started when the connection holding module holds a connection, and to invoke the connection releasing module to release the call when a preset duration expires. The invoking among these modules will be described in the individual flows as described hereunder.

A flow at the termination of a call in a called party processing flow of a mobile communication system according to the present invention will be described hereunder.

As shown in Figure 4, in step 410, the MSC in a mobile communication system determines whether the type of a call is identical to a preset call type. Particularly, when completing the processing of the call to an intelligent subscriber, the MSC determines whether the type of the call is identical to the preset call type. If the type of the call is identical to the preset call type, the procedure proceeds to step 420 in which the MSC holds the connection and starts a timer. If the type of the call is not identical to the preset call type, the procedure proceeds to step 440 directly in which the MSC releases the connection set up for the call. The preset call type may be PSI call.

In step 420, the MSC holds the connection and starts the timer. Particularly, when the call type identifying module of the MSC determines that the type of the call is identical to the preset call type, it invokes the connection holding module of the MSC to hold the connection of the call so that the connection may be used directly for the next call to the same called subscriber, and at the same time, to start the timer of the MSC.

Then the procedure proceeds to step 430. The MSC determines whether the holding time of the connection exceeds a preset threshold. In other words, the MSC controls the holding time of the connection with the timer. When the period of holding connection by the connection holding module exceeds the preset duration, that is, the timer expires, the procedure proceeds to step 440 in which the connection is released.

In step 440, the MSC releases the connection. If the call type identifying module determines that the type of the call is not identical to the preset call type in step 410 and thus the procedure proceeds to step 440, the MSC directly releases the connection set up for the call through invoking the connection releasing module in step 440. If the call type identifying module determines that the type of the call is identical to the preset call type, the MSC releases the connection set up for the call through invoking the connection releasing module when the timer expires.

A flow at the receipt of a call in a called party processing flow of a mobile communication system according to the present invention will be described hereunder.

As shown in Figure 5, in step 510, upon receipt of a call, the MSC checks whether there is a connection with the called subscriber held currently. If there is, the procedure proceeds to step 520 in which the call procedure is continued using the connection directly. If there isn't, the procedure proceeds to step 530 in which a connection with the called subscriber terminal is set up through paging. The type of the call received by the MSC may include voice service paging, short message service paging, supplementary service paging, video service paging, location service paging, PSI paging and the like.

In step 520, the MSC uses the connection to continue with the call procedure. Because the MSC will not directly release the set up connection when the call with the preset type is terminated, the MSC may still hold (in the case that the timer has not expired) the connection with the called subscriber upon receipt of a call with the type of voice service paging, short message service paging, supplementary service paging, PSI paging and the like. Therefore, the MSC may use this connection directly to continue with the call procedure without sending a PAGING message.

In step 530, the MSC sets up a connection with the subscriber being called: The MSC sets up the connection with the called subscriber terminal through sending a PAGING message if it doesn't hold a connection with the called subscriber currently.

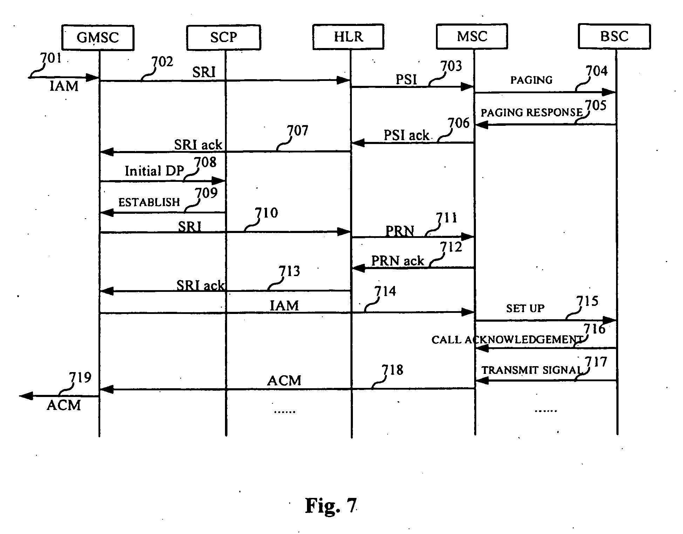

A called part processing flow in a mobile communication system according to a first embodiment of the present invention is shown in Figure 7. In this embodiment, the mobile communication system is a GSM system and the preset call type is PSI call.

When an intelligent subscriber is called, the procedure proceeds to step 701 in which the GMSC receives an Initial Address Message (IAM).

In step 702, the GMSC sends a Send Routing Info (SRI) to the HLR.

In step 703, the HLR sends a PSI call to the MSC.

In step 704, the MSC sends a PAGING message to the BSC.

In step 705, the BSC sends a PAGING RESPONSE to the MSC.

Steps 701 to 705 are identical to those in the prior art. After receiving the response to the PSI PAGING that is, when the processing of the call to the intelligent subscriber is completed by the MSC, the MSC determines whether the type of the call is identical to the preset call type through the call type identifying module. In this embodiment, the preset call type is PSI call, so the call type identifying module may affirm that the type of the call is identical to the preset call type. Therefore, the MSC doesn't release the connection immediately, but holds the connection with the called subscriber and starts the timer at the same time through the connection holding module. The MSC does not release the connection through invoking the connection releasing module until the period of holding the connection exceeds a preset duration, that is, until the timer expires. For an instance, the preset duration is 3 seconds, when the MSC has held the connection with the called subscriber for 3 seconds, the timer expires and invokes the connection releasing module to release the connection.

In step 706, the MSC sends a response to the HLR to respond the PSI call.

In step 707, the HLR sends a response to the GMSC to respond the SRI.

In step 708, the GMSC sends an initial Data Packet (DP) to the SCP.

In step 709, the SCP instructs the GMSC to carry out the establishment.

In step 710, the GSMC sends an SRI to the HLR again.

In step 711, the HLR Provides Roaming Number (PRN) to the MSC.

In step 712, the MSC sends a response to the HLR to respond the PRN.

In step 713, the HLR sends a response to the GSMC to respond the SRI.

In step 714, the GMSC sends the IAM to the MSC.

Steps 706 to 714 are identical to those in the prior art. Upon receipt of the IAM, the MSC checks whether there is a connection with the called subscriber held currently, instead of sending a PAGING message immediately. Generally, when the called party is an intelligent subscriber, the call may be established normally in most cases. In other words, in most cases, there will be a subsequent call after the PSI call, and the interval between the two calls is very short, typically about 1 second. Therefore, the interval will not exceed the duration preset in the timer. In other words, the MSC still holds the connection with the called subscriber at this time.

Subsequently, the procedure proceeds to step 715, the MSC uses the established wireless channel directly.

In step 716, the BSC sends a call acknowledgement to the MSC.

In step 717, the BSC sends a signal to the MSC.

In step 718, the MSC sends an Address Complete Message (ACM) to the GMSC.

In step 719, the GMSC sends the received ACM. Consequently, the connection between the calling subscriber and the called subscriber is set up, thus the calling subscriber and the called subscriber may communicate with each other.

It may be seen from the above description that when the called subscriber is an intelligent subscriber, the MSC may use the connection held in the previous call to integrate two times of paging into one time, thereby simplifying the call procedure, shortening the time for establishing the call, saving the resources of the network side and the access side, reducing the PAGING messages to be sent to the access side from the network side and decreasing the load of the access side. Moreover, initiating paging two times in a short period may be avoided. As a result, the issue that some types of mobile phones can not respond a subsequent call paging at once because the RR/RRC connection set up upon the PSI PAGING RESPONSE has not been released completely may be resolved, and thus the paging success rate of paging for subsequent ordinary calls may be increased.

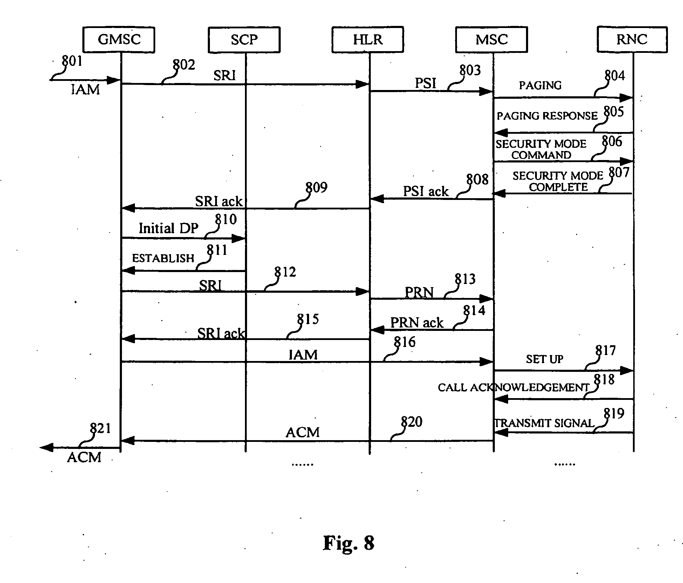

A called part processing flow in a mobile communication system according to a second embodiment of the present invention is shown in Figure 8. The second embodiment is basically identical to the first embodiment, except that the respective mobile communication system to which the second embodiment is applied is different from the one to which the first embodiment is applied. The mobile communication system in the first embodiment is a GSM system, and the mobile communication system in the second embodiment is a WCDMA system. The procedure in which the MSC uses the connection held after the previous call to integrate the two times of paging into one time in the second embodiment is identical to that of the first embodiment, and thus the second embodiment may also achieve the effect and purpose of the first embodiment. Relative steps will be described hereunder briefly.

Steps 801 to 805 correspond to steps 701 to 705. With respect to the GSM system, an interaction related to SECURITY MODE is added in the WCDMA system, as shown in step 806 and 807. Steps 808 to 821 correspond to steps 706 to 719, respectively.

Although the present invention has been described and illustrated with reference to some preferred embodiments or the present invention, it shall be understood by those skilled in the art that various modifications and variations may be made to those embodiments in form and detail without departing from the scope of the present invention.

## Claims

1. A called party processing method in a mobile communication system, **characterized by** comprising:
upon termination of a first call, if the type of the first call is identical to a preset call type (410), holding (420), by a mobile switching centre, a connection to a called subscriber used in the first call, otherwise, releasing (440) the connection;
upon receipt of a second call, if there is a connection held between the mobile switching centre and a called subscriber of the second call (510), directly using (520), by the mobile switching centre, the connection to proceed the call procedure, otherwise, setting up (530), by the mobile switching centre, a connection with the called subscriber through paging.

2. The called party processing method in a mobile communication system according to claim 1, further comprising:
releasing the connection of which a holding duration has exceeded a preset threshold.

3. The called party processing method in a mobile Communication system according to claim 1 or 2, wherein the preset call type is Provide Subscriber Information call.

4. The called party processing method in a mobile communication system according to claim 1 or 2, wherein the type of the first call comprises:
voice service paging, short message service paging, supplementary service paging, video service paying, location service paying and Provide Subscriber Information paging.

5. The called party processing method in a mobile communication system according to claim 1 or 2, wherein the mobile communication system comprises Global System for Mobile communication and Wideband Code Division Multiple Access system.

6. A mobile switching centre, configured to control and manage communication and to establish and manage a call to/from a mobile subscriber located in a control region of the mobile switching centre, and comprising a connection releasing module (2) configured to release a connection, **characterized in that**, the mobile switching centre further comprises:
a call type identifying module (1), configured to determine whether the type or a call is identical to a preset call type;
a connection holding module (3), configured to hold a connection to a called subscriber used in the call upon termination of the call;
wherein when the processing for a call is performed by the mobile switching centre, the call type identifying module (1) determines whether the type of the call is identical to a preset call type; if the type of the call is identical to a preset call type, the mobile switching centre invokes the connection holding module (3) to hold the connection of the call for a next call to the same called subscriber; otherwise, the mobile switching centre invokes the connection releasing module (2) to release the connection of the call.

7. The mobile switching centre according to claim 6, further comprising:
a timer (4), configured to start at a time when the connection holding module (3) holds the connection, and to invoke the connection releasing module (2) to release the connection when a preset duration expires.

8. The mobile switching centre according to claim 6 or 7, wherein the preset call type is Provide Subscriber Information call.

9. The mobile switching centre according to claim 6 or 7, wherein the mobile switching centre is subordinate to a Global System for Mobile communication or a Wideband Code Division Multiple Access system.

## Patentansprüche

1. Verarbeitungsverfahren des angerufenen Teilnehmers in einem Mobilkommunikationssystem, **gekennzeichnet durch** die folgenden Schritte:
auf den Abschluss eines ersten Anrufs hin, wenn der Typ des ersten Anrufs mit einem voreingestellten Anruftyp identisch ist (410), Halten (420) einer bei dem ersten Anruf verwendeten Verbindung mit einem angerufenen Teilnehmer **durch** eine Mobilvermittlungsstelle, andernfalls Freigeben (440) der Verbindung;
auf den Empfang eines zweiten Anrufs hin, wenn eine gehaltene Verbindung zwischen der Mobilvermittlungsstelle und einem angerufenen Teilnehmer des zweiten Anrufs besteht (510), direktes Verwenden (520) der Verbindung **durch** die Mobilvermittlungsstelle, um mit der Anrufprozedur fortzufahren, andernfalls Aufbauen (530) einer Verbindung mit dem angerufenen Teilnehmer mittels Paging **durch** die Mobilvermittlungsstelle.

2. Verarbeitungsverfahren des angerufenen Teilnehmers in einem Mobilkommunikationssystem nach Anspruch 1, ferner mit dem folgenden Schritt:
Freigeben der Verbindung, von der eine Haltedauer eine voreingestellte Schwelle überschritten hat.

3. Verarbeitungsverfahren des angerufenen Teilnehmers in einem Mobilkommunikationssystem nach Anspruch 1 oder 2, wobei der voreingestellte Anruftyp ein Teilnehmerinformationen-Bereitstellen-Anruf ist.

4. Verarbeitungsverfahren des angerufenen Teilnehmers in einem Mobilkommunikationssystem nach Anspruch 1 oder 2, wobei der Typ des ersten Anrufs Folgendes umfasst:
Voice-Dienst-Paging, SMS-Paging, Ergänzungsdienst-Paging, Videodienst-Paging, Ortsdienst-Paging und Teilnehmerinformationen-Bereitstellen-Paging.

5. Verarbeitungsverfahren des angerufenen Teilnehmers in einem Mobilkommunikationssystem nach Anspruch 1 oder 2, wobei das Mobilkommunikationssystem das Global System for Mobile communication und das Wideband Code Division Multiple Access system umfasst.

6. Mobilvermittlungsstelle, die dafür ausgelegt ist, Kommunikation zu steuern und zu verwalten und einen Anruf zu/von einem sich in einer Kontrollregion der Mobilvermittlungsstelle befindenden Mobilteilnehmer aufzubauen und zu verwalten, und die ein Verbindungsfreigabemodul (2) umfasst, das dafür ausgelegt ist, eine Verbindung freizugeben, **dadurch gekennzeichnet, dass** die Mobilvermittlungsstelle ferner Folgendes umfasst:
ein Anruftyp-Identifizierungsmodul (1), das dafür ausgelegt ist zu bestimmen, ob der Typ eines Anrufs mit einem voreingestellten Anruftyp identisch ist;
ein Verbindungshaltemodul (3), das dafür ausgelegt ist, eine bei dem Anruf verwendete Verbindung mit einem angerufenen Teilnehmer auf den Abschluss des Anrufs hin zu halten;
wobei, wenn die Verarbeitung für einen Anruf durch die Mobilvermittlungsstelle durchgeführt wird, das Anruftyp-Identifizierungsmodul (1) bestimmt, ob der Typ des Anrufs mit einem voreingestellten Anruftyp identisch ist; wenn der Typ des Anrufs mit einem voreingestellten Anruftyp identisch ist, ruft die Mobilvermittlungsstelle das Verbindungshaltemodul (3) auf, um die Verbindung des Anrufs für einen nächsten Anruf desselben angerufenen Teilnehmers zu halten; andernfalls ruft die Mobilvermittlungsstelle das Verbindungsfreigabemodul (2) auf, um die Verbindung für den Anruf freizugeben.

7. Mobilvermittlungsstelle nach Anspruch 6, ferner umfassend:
einen Timer (4), der dafür ausgelegt ist, zu einem Zeitpunkt zu starten, wenn das Verbindungshaltemodul (3) die Verbindung hält, und das Verbindungsfreigabemodul (2) aufzurufen, um die Verbindung freizugeben, wenn eine voreingestellte Dauer abläuft.

8. Mobilvermittlungsstelle nach Anspruch 6 oder 7, wobei der voreingestellte Anruftyp ein Teilnehmerinformationen-Bereitstellen-Anruf ist.

9. Mobilvermittlungsstelle nach Anspruch 6 oder 7, wobei die Mobilvermittlungsstelle einem Global System for Mobile communication oder einem Wideband Code Division Multiple Access system untergeordne

## Revendications

1. Procédé de traitement d'un correspondant appelé dans un système de communication mobile, **caractérisé en ce qu'**il comprend :
lors de l'achèvement d'un premier appel, si le type du premier appel est identique à un type d'appel préétabli (410), le maintien (420), par un centre de commutation mobile, d'une connexion vers un abonné appelé utilisée dans le premier appel, et sinon, la libération (440) de la connexion ;
lors de la réception d'un second appel, s'il existe une connexion maintenue entre le centre de commutation mobile et un abonné appelé du second appel (510), l'utilisation directe (520), par le centre de commutation mobile, de la connexion afin de poursuivre la procédure d'appel, et sinon, l'établissement (530), grâce au centre de commutation mobile, d'une connexion avec l'abonné appelé par l'intermédiaire d'une recherche de personne.

2. Procédé de traitement d'un correspondant appelé dans un système de communication mobile selon la revendication 1, comprenant en outre :
la libération de la connexion dont la durée de maintien a dépassé un seuil préétabli.

3. Procédé de traitement d'un correspondant appelé dans un système de communication mobile selon la revendication 1 ou 2, dans lequel le type d'appel préétabli est un appel de type Fourniture d'Informations sur un Abonné (PSI).

4. Procédé de traitement d'un correspondant appelé dans un système de communication mobile selon la revendication 1 ou 2, dans lequel le type du premier appel comprend :
de la recherche de personne par service vocal, de la recherche de personne par service de messagerie SMS, de la recherche de personne par complément de service, de la recherche de personne par service vidéo, de la recherche de personne par service de localisation et de la recherche de personne par Fourniture d'Informations sur un Abonné.

5. Procédé de traitement d'un correspondant appelé dans un système de communication mobile selon la revendication 1 ou 2, dans lequel le système de communication mobile comprend le Système Mondial de Communication Mobile et le système d'Accès Multiple par Différence de Code à Large bande.

6. Centre de commutation mobile, configuré pour commander et gérer une communication et pour établir et gérer un appel vers ou depuis un abonné mobile situé dans une région de contrôle du centre de commutation mobile, et comprenant un module (2) de libération de connexion configuré pour libérer une connexion, **caractérisé en ce que** le centre de commutation mobile comprend en outre :
un module (1) d'identification de type d'appel, configuré pour déterminer si le type d'appel est identique à un type d'appel préétabli ;
un module (3) de maintien de connexion, configuré pour maintenir une connexion vers un abonné appelé, utilisé dans l'appel après achèvement de l'appel ;
dans lequel, lorsque le traitement d'un appel est effectué par le centre de commutation mobile, le module (1) d'identification de type d'appel détermine si le type de l'appel est identique à un type d'appel préétabli ; si le type de l'appel est identique à un type d'appel préétabli, le centre de commutation mobile appelle le module (3) de maintien de connexion afin de maintenir la connexion de l'appel pour un appel ultérieur vers le même abonné appelé ; sinon, le centre de commutation mobile appelle le module (2) de libération de connexion afin de libérer la connexion de l'appel.

7. Centre de commutation mobile selon la revendication 6, comprenant en outre :
un temporisateur (4) configuré pour démarrer à un instant où le module (3) de maintien de connexion conserve la connexion, et pour appeler le module (2) de libération de connexion pour libérer la connexion lorsqu'une durée préétablie arrive à terme.

8. Centre de commutation mobile selon la revendication 6 ou 7, dans lequel le type d'appel préétabli est un appel de Fourniture d'Informations sur un Abonné.

9. Centre de commutation mobile selon la revendication 6 ou 7, dans lequel le centre de commutation mobile est subordonné au Système Mondial de Communication Mobile et au système d'Accès Multiple par Différence de Code à Large bande.
